# EUROPÄISCHE PATENTANMELDUNG

(11) **EP 1 568 464 A2**
(43) Veröffentlichungstag der Anmeldung: **31.08.2005**
(21) Anmeldenummer: 05003962.7
(22) Anmeldetag: 24.02.2005
(51) Int. Cl.: B29C 47/08, B29C 47/12

(54) **Spannvorrichtung für eine Extrusionswerkzeug und Extruder mit einer derartigen Spannvorrichtung**

(30) Priorität: 26.02.2004 DE 102004009354
(71) Anmelder: REHAU AG + Co, 95111 Rehau (DE)
(72) Erfinder: Schönweiss, Thomas, 08606 Oelsnitz (DE); Kuckelsberg, Frank, 33689 Bielefeld (DE)

(57) **Zusammenfassung**

Die Erfindung betrifft eine Spannvorrichtung für ein Extrusionswerkzeug mit einem Spannelement zum lösbaren Verbinden des Extrusionswerkzeuges mit einem Extruder und einer Betätigungseinrichtung zum Lösen und Spannen des Spannelements. Die Spannvorrichtung zeichnet sich durch ein Spannmittel aus mit einem extruderseitigen Anschlussbereich, der durch das Spannelement mit dem Extruder lösbar verbunden ist, und einem werkzeugseitigen Anschlussbereich der mit dem Extrusionswerkzeug lösbar oder fest verbunden ist.

## Beschreibung

Die Erfindung bezieht sich auf eine Spannvorrichtung für ein Extrusionswerkzeug mit den Merkmalen des Oberbegriffs des Anspruchs 1 und auf eine Spannvorrichtung für ein Extrusionswerkzeug mit den Merkmalen des Oberbegriffs des Anspruchs 19. Spannvorrichtungen dieser Gattung sind aus der DE 102 35 151 A1 bekannt. Die Erfindung bezieht sich ferner auf einen Extruder mit einer derartigen Spannvorrichtung.

Extrusionswerkzeuge geben plastischem Polymermaterial die gewünschte Raumform für die herzustellenden Profile. Teile der Werkzeuge, nämlich die Düsen, werden am Extruder aufgespannt. Dabei werden ― abgesehen von wenigen technischen Sonderlösungen ― jeweils individuelle Düsen für eine jede herzustellende Raumform der Profile benötigt.

Nach Beendigung der Herstellung der Profillänge muss das aufgespannte Werkzeug in einem Rüstprozess vom Extruder abgekoppelt werden, um es der Reinigung zuzuführen. Der nächste Produktionsauftrag wird dann mit einer anderen Düse durchgeführt, die zunächst am Extruder aufgespannt, auf Betriebstemperatur gebracht, ausgerichtet werden muss, und dann festgezogen wird.

Je nach der zu extrudierenden Länge an Profil kann die Produktionszeit mit einem Werkzeug zum Teil sehr kurz sein, so dass der vergleichsweise erhebliche Zeitbedarf für den Rüstprozess die Herstellungskosten erhöht. Dies belastet insbesondere die Produktion von Profilen, die in kleinen Serien hergestellt werden, wobei die Rüstkosten erhebliche Ausmaße annehmen können.

Der hohe Zeitbedarf kommt insbesondere daher, dass die Düse am Extruderkopf mittels mehrerer Schrauben äußerst fest unter Einsatz von Drehmomentschlüsseln angebracht werden muss, um den bei der Extrusion herrschenden Drücken standzuhalten und den Ausgang des Extruderzylinders dicht abzuschließen. Dabei muss vor dem Spannen ein Aufheizen der Vorrichtungen auf Betriebstemperatur erfolgen, um der Wärmeausdehnung der miteinander verbundenen Komponenten Rechnung zu tragen, so dass im Betrieb eine vorgegebene Spannkraft eingehalten wird. Das Anziehen der Schrauben erfolgt dabei unter Beachtung bestimmter Abläufe. Eine Nichtbeachtung dieser Abläufe kann zu Störungen im Betrieb oder zur Beschädigung des Extruders führen, darüber hinaus können Spannfehler auftreten.

Außerdem muss die Düse im Hinblick auf die dem Extrusionsprozess nachgeschalteten Arbeitsschritte, wie beispielsweise Kalibrierung, Kühlung, Prägung, Bedruckung, Ablängung, usw. exakt durch Hilfsmittel, wie z.B. Wasserwaagen, rotatorisch ausgerichtet werden, was ebenfalls einen gewissen Zeitaufwand erfordert und eine mögliche Fehlerquelle darstellt.

Das Rüsten solcher Düsen durch Aufspannen oder Abnehmen vom Extruder ist ferner mit einer Beschädigungsgefahr für das Werkzeug verbunden, da die Schraubverbindungen unter den herrschenden Temperaturen und insbesondere aufgrund der großen Temperaturdifferenzen zum Verschleiß neigen, was dazu führt, dass diese Arbeiten oftmals mit großer Krafteinwirkung stattfinden.

Ferner können die Schraubverbindungen nicht ausreichend schnell gelöst werden, wenn sich im Extruder ein Überdruck aufbaut, um die Düse zum Schutz abzukoppeln.

Insbesondere bei der PVC-Extrusion entsteht der hohe Zeitbedarf für das Rüsten durch das Aufheizen der Düse, daneben auch durch die Gefahr des Einbrennens der heißen PVC-Masse im Extruder, wenn diese nicht gefördert wird. Bei länger dauernden Rüstvorgängen muss daher der Extruder entleert werden und nach dem Werkzeugwechsel wieder neu befüllt und angefahren werden.

Es wurden daher Anstrengungen unternommen, das Aufspannen und Wechseln von Extrusionswerkzeugen zu vereinfachen und insbesondere schneller vornehmen zu können.

Neben der bekannten Technik, das Aufspannen der Düsen durch mehrere über den Umfang der Düse, insbesondere des Düsenflansches, verteilte Schraubgewinde vorzunehmen, ist es bekannt, die Spannkraft mittels eines Klappflansches durch ein Keilprinzip zu erzeugen, bei dem nur ein Schraubengewinde notwendig ist. Allerdings wird der Klappflansch mit hohem Kraftaufwand unter Inkaufnahme von Beschädigungen des Flansches vom Extruder gelöst. Außerdem besteht die Gefahr bleibender Verformungen des Flansches durch die aufgebrachte Spannkraft.

Die eingangs genannte DE 102 35 151 A1 offenbart eine Haltevorrichtung für eine Extrusionsdüse, die aus mehreren in Extrusionsrichtung hintereinander angeordneten Düsenplatten gebildet ist. Das Aufspannen dieser Extrusionsdüse erfolgt durch zwei plattenförmige Zugelemente, die an den Seiten der Extrusionsdüse angeordnet sind. Das eine Ende dieser Zugelemente ist mit der in Extrusionsrichtung letzten Düsenplatte, die den Werkzeugausgang bildet, verbunden. Das andere Ende der Zugelemente ist mit einem beweglichen Zylinder einer Kolben-Zylinder-Anordnung verbunden. Das Plattenpaket ist zwischen dem mit dem Extruder verschraubten, ortsfesten Kolben der Kolben-Zylinder-Anordnung und dem werkzeugausgangsseitigen Ende der Zugelemente eingespannt. Zum Spannen der Extrusionsdüse wird die Kolben-Zylinder-Anordnung mit einem Spanndruck beaufschlagt, der den beweglichen Zylinder und das mit diesem verbundene Zugelement gegen den Extruder drängt und dadurch das Zugelement mit einer in Richtung des Extruders wirkenden Zugkraft beaufschlagt. Dadurch wird das zwischen dem werkzeugausgangsseitigen Ende der Zugelemente und dem ortsfesten Kolben der Kolben-Zylinder-Anordnung eingespannte Düsenpaket gegen den Kolben gepresst und somit am Extruder aufgespannt.

Um eine zentrische Zugbelastung der Zugelemente zu erreichen, sind weitere Kolben-Zylinder-Anordnungen seitlich vorgesehen, die an den jeweiligen Enden der Zugelemente angreifen und diese mit einer Zugkraft beaufschlagen.

Diese bekannte Vorrichtung hat den Nachteil, dass die Außenmaße der Düse von der Haltevorrichtung bestimmt sind. Diese Vorrichtung ist deshalb nicht für verschiedene Düsen verwendbar, sondern macht einheitliche Düsenaußenmaße erforderlich. Überdies können Düsen mit großen Profilquerschnitten oder z. B. Verteilerflansche für Doppelstrangfertigung aufgrund der begrenzten Düsenaußenmaße nicht mit diesem System aufgespannt werden.

Ein weiteres Problem der bekannten Vorrichtungen zum Aufspannen von Extrusionsdüsen besteht darin, dass das Strömungsverhalten der Schmelze in der Vorrichtung zum Aufspannen beeinträchtigt werden kann.

Der Erfindung liegt deshalb die Aufgabe zugrunde, eine Spannvorrichtung der eingangs genannten Art derart zu verbessern, dass eine flexible Verwendung der Spannvorrichtung für verschiedene Extrusionswerkzeuge ermöglicht und der Werkzeugwechsel vereinfacht wird.

Der Erfindung liegt ferner die Aufgabe zugrunde, einen Extruder mit einer derartigen Spannvorrichtung anzugeben.

Hinsichtlich der Spannvorrichtung wird diese Aufgabe erfindungsgemäß durch den Gegenstand des Anspruchs 1 gelöst. Hinsichtlich des Extruders wird diese Aufgabe durch den Gegenstand des Anspruchs 21 gelöst.

Eine weitere Aufgabe der Erfindung ist es, das Strömungsverhalten in der Spannvorrichtung zu verbessern.

Diese Aufgabe wird erfindungsgemäß durch den Gegenstand des Anspruchs 19 gelöst.

Die Erfindung hat den Vorteil, dass zwischen dem Extrusionswerkzeug und dem Extruder das Spannmittel angeordnet ist, an dem das Spannelement angreift, so dass die Spannkraft in den Spannring eingeleitet wird. Das Extrusionswerkzeug wird somit über das zwischengeschaltete Spannmittel am Extruder aufgespannt.

Die erfindungsgemäße Spannvorrichtung ist deshalb flexibel verwendbar, da verschiedene Extrusionswerkzeuge mit dem werkzeugseitigen Anschlussbereich des Spannmittels einfach verbunden werden können. Insbesondere bei aus Düsenplatten bestehenden Extrusionsdüsen kann die extruderseitige erste Düsenplatte mit einem passenden Anschluss ausgerüstet werden, durch den diese Platte mit dem Spannmittel lösbar oder fest verbunden wird. Die nachgeordneten übrigen Düsenplatten können wie bisher montiert werden.

Durch das Spannmittel wird außerdem die unmittelbare Einleitung der Spannkraft vom Extrusionswerkzeug abgekoppelt, wodurch ein größerer gestalterischer Freiraum geschaffen wird, da die Konzeption des Werkzeuges keinen Beschränkungen hinsichtlich der Einleitung der Spannkraft unterliegt.

Im Gegensatz zu der erfindungsgemäßen Spannvorrichtung wird bei der aus der DE 102 35 151 A1 bekannten Vorrichtung die Spannkraft direkt über die am Düsenausgang angreifenden Zugelemente in die Extrusionsdüse eingeleitet. Abgestützt wird die Extrusionsdüse dabei von den Betätigungselementen, nämlich von dem ortsfesten Kolben.

Die Erfindung hat ferner den Vorteil, dass das Spannmittel und das damit verbundene Extrusionswerkzeug schnell durch Lösen des Spannelements vom Extruder entfernbar ist, so dass das Extrusionswerkzeug vor Beschädigung durch Überdruck sicher geschützt werden kann. Das Spannen und Lösen des Spannmittels durch das Spannelement erfolgt auf einfache Weise ohne Kraftaufwand, so dass die betreffenden Bauteile, insbesondere das Extrusionswerkzeug, nicht beschädigt werden. Die Rüstzeiten für den Werkzeugwechsel werden mit Hilfe der Erfindung stark verkürzt. Insbesondere ist ein Düsenwechsel in einem Zeitraum von ca. 1 min zu bewerkstelligen, soweit kein Materialwechsel auf der Maschine vorzunehmen ist.

In einer bevorzugten Ausführungsform umfasst das Spannmittel einen Spannring mit einem radial vorstehenden Absatz, der im extruderseitigen Anschlussbereich angeordnet und mit einer zum Extrusionswerkzeug weisenden ersten Anlagefläche ausgebildet ist. Der Vorteil der Ausbildung des Spannmittels als Spannring besteht darin, dass der Spannring besonders einfach an das werkzeugseitige Ende des Extruders angekoppelt werden kann. Dazu umfasst der Spannring einen radial vorstehenden Absatz, der im extruderseitigen Anschlussbereich des Spannrings angeordnet ist und mit einer zum Extrusionswerkzeug weisenden ersten Anlagefläche ausgebildet ist. An dieser derart ausgerichteten ersten Anlagefläche kann das Spannelement angreifen und den Spannring gegen den Extruder ziehen.

In einer weiteren bevorzugten Ausführungsform weist der extruderseitige Anschlussbereich des Spannrings einen axialen Fortsatz auf, in dem wenigstens eine in Richtung des Extruders geöffnete Radialnut zur Ausrichtung des Spannrings vorgesehen ist. Die Radialnut In einer weiteren bevorzugten Ausführungsform der Erfindung weist der extruderseitige Anschlussbereich des Spannrings eine in Umfangsrichtung vorgesehene Auflagefläche auf, die bezüglich der ersten Anlagefläche zumindest abschnittsweise in entgegengesetzter Richtung angeordnet ist. Durch diese Anordnung zumindest eines Bereichs der Auflagefläche wird eine Dichtfläche geschaffen, die gegen eine zugehörige Dichtfläche des Extruders gepresst wird, wenn die erste Anlagefläche des Spannrings mit einer Spannkraft beaufschlagt wird. Diese Ausgestaltung der Erfindung stellt eine besonders einfache und wirkungsvolle Art der Abdichtung des Spannrings gegen die den Spannring durchströmende Schmelze dar.

Zweckmäßigerweise kann der werkzeugseitige Anschlussbereich einteilig mit einem extruderseitigen Endabschnitt des Extrusionswerkzeugs ausgebildet sein. Diese Ausgestaltung der Erfindung eignet sich besonders für das Aufspannen von Extrusionsdüsen, die aus mehreren Düsenplatten gebildet sind, wobei der werkzeugseitige Anschlussbereich mit der in Extrusionsrichtung ersten Düsenplatte einteilig verbunden ist.

Außerdem bietet es sich bei der einteiligen Ausbildung des Spannrings mit dem Extrusionswerkzeug an, die vorstehend beschriebene Auflagefläche zur Abdichtung des Spannrings vorzusehen.

Alternativ kann der werkzeugseitige Anschlussbereich im Wesentlichen zylinderförmig sein und ein Gewinde aufweisen. Diese Ausgestaltung der Erfindung ist besonders flexibel und erlaubt die Anbindung der Spannvorrichtung an die unterschiedlichsten Extrusionswerkzeuge.

Es ist auch möglich, die Spannvorrichtung so auszubilden, dass der werkzeugseitige Anschlussbereich einen hakenförmigen Endabschnitt aufweist, der das Extrusionswerkzeug übergreift. Diese Ausgestaltung der Erfindung ist für Extrusionsdüsen mit einheitlichen Außenmaßen vorgesehen bzw. für Extrusionsdüsen, die zur Produktion größerer Serien eingesetzt und erst nach längeren Produktionszeiten gewechselt werden.

In bevorzugter Weise ist dem Spannelement ein Freigabeelement zugeordnet, das eine Stellkraft zur Erzeugung einer im Wesentlichen radialen Freigabebewegung des Spannelements aufbringt. Dadurch wird das Lösen des Spannmittels erleichtert, da das Spannelement das Spannmittel durch die radiale Bewegung seitlich freigibt.

Dem Spannelement kann ein Schließelement zugeordnet sein, das eine Stellkraft zur Erzeugung einer im Wesentlichen radialen / axialen Schließbewegung des Spannelements aufbringt. Mit dieser Ausgestaltung wird das Spannen des Spannmittels erleichtert, da durch die radiale Schließbewegung das Spannelements automatisch in Eingriff mit dem Spannmittel gebracht werden kann.

In einer bevorzugten Ausführungsform wirkt die Stellkraft zur Erzeugung der Schließbewegung der Stellkraft zur Erzeugung der Freigabebewegung entgegen. Damit kann die Stellkraft zur Erzeugung der Schließbewegung genutzt werden, um das Freigabeelement vorzuspannen.

In einer weiteren bevorzugten Ausführungsform der Erfindung umfasst das Spannelement wenigstens zwei Spannhaken. Mit Hilfe der Spannhaken kann das Spannmittel, insbesondere der Spannring, besonders einfach und schnell an den Extruder angekoppelt bzw. von diesem abgekoppelt werden.

Die Spannhaken können jeweils eine Ausnehmung mit einer extruderseitigen zweiten Anlagefläche aufweisen, die mit der am Spannring vorgesehenen ersten Anlagefläche in Anlage bringbar ist. Durch Anlage der am Spannhaken vorgesehenen zweiten Anlagefläche mit der am Spannring vorgesehenen ersten Anlagefläche kann die Spannkraft in den Spannring eingeleitet werden. Dazu ist die zweite Anlagefläche am Spannhaken extruderseitig, also in Richtung des Extruders weisend, angeordnet, so dass ein Zusammenwirken mit der werkzeugseitigen ersten Anlagefläche am Spannring, die in Richtung des Werkzeuges weist, möglich ist. Diese Ausgestaltung der Erfindung gestattet eine besonders einfache Einleitung der Spannkraft in den Spannring.

Zweckmäßigerweise weisen die Spannhaken jeweils einen Vorsprung mit einer werkzeugseitigen dritten Anlagefläche auf, die mit der Betätigungseinrichtung zusammenwirkt. Durch die werkzeugseitige Anordnung der dritten Anlagefläche, die in Richtung des Extrusionswerkzeuges weist, wird ein Angriffspunkt geschaffen, an dem die Betätigungseinrichtung ansetzt, um eine in Extruderrichtung wirkende Spannkraft auf den Spannhaken aufzubringen.

Bevorzugterweise umfasst das Freigabeelement einen Federring, auf dessen Umfang die Spannhaken kraftschlüssig angeordnet sind. Dieser Federring umgibt die Spannhaken und bringt eine radial wirkende Stellkraft auf die Spannhaken auf, die eine im Wesentlichen radiale Freigabebewegung der Spannhaken bewirkt. Diese Ausführungsform der Erfindung hat den Vorteil, dass mittels eines einzigen Bauteils, nämlich des Federrings, alle Spannhaken betätigt werden können.

In einer weiteren bevorzugten Ausführungsform der Erfindung umfasst das Schließelement eine radial angeordnete Nase, die an jedem Spannhaken ausgebildet ist, wobei die Nase eine schräge, extruderseitige Fläche aufweist, die über eine ortsfeste Kante eines Führungsteils bewegbar ist. Durch Bewegen dieser Nase, insbesondere der schrägen, extruderseitigen Fläche der Nase über die ortsfeste Kante des Führungsteils wird dem Spannhaken eine radiale Schließbewegung aufgeprägt, die den Spannhaken an den Spannring heranführt.

Die Spannhaken können jeweils eine zum Spannring weisende Innenseite und eine gegenüber angeordnete Außenseite aufweisen, wobei die Ausnehmung und der Vorsprung an der Innenseite, sowie die Nase und eine den Federring aufnehmende Nut an der Außenseite ausgebildet sind, und der Vorsprung zwischen der Nut und der Nase angeordnet und als Drehpunkt ausgebildet ist. Durch die Anordnung des Vorsprungs zwischen der Nut und der Nase wird erreicht, dass der Spannhaken als Hebel bewegbar ist, wobei der Vorsprung als Drehpunkt fungiert. Die Stellkräfte werden durch den in der Nut angeordneten Federring bzw. über die radial angeordnete Nase eingebracht und bewirken eine Freigabebewegung bzw. eine Schließbewegung des Spannhakens. Damit wird das Abnehmen bzw. das Aufspannen des Extrusionswerkzeuges erleichtert.

Bevorzugterweise umfasst die Betätigungseinrichtung einen zum Spannen der Spannhaken in axialer Richtung der Spannvorrichtung bewegbaren Kolben, der Mittel zur Lagerung der Spannhaken aufweist, wobei ein Vorsprung mit einer extruderseitigen vierten Anlagefläche vorgesehen ist, die mit der an den Spannhaken jeweils vorgesehenen dritten Anlagefläche in Anlage bringbar ist. Diese Ausgestaltung der Betätigungseinrichtung gestattet auf einfache Weise das Spannen und Lösen der Spannhaken. Dazu umfassen die Mittel zur Lagerung der Spannhaken einen Vorsprung mit einer extruderseitigen vierten Anlagefläche.

Diese vierte Anlagefläche weist somit in Richtung des Extruders und ermöglicht die Übertragung einer in Extruderrichtung wirkenden Spannkraft auf die werkzeugseitige dritte Anlagefläche am Spannhaken.

Ferner kann ein Ringeinsatz vorgesehen sein, der dem Spannring koaxial in Extrusionsrichtung vorgeordnet und dessen Innendurchmesser in Extrusionsrichtung gleichbleibend oder variabel ist. Das bedeutet, dass der Innendurchmesser konstant sein oder in Extrusionsrichtung größer oder kleiner werden kann. Mit Hilfe dieses Ringeinsatzes wird der Durchmesser des zur Extrusionsdüse führenden Schmelzekanals angepasst, wodurch das Strömungsverhalten der Schmelze positiv beeinflusst wird.

Nachfolgend wird die Erfindung anhand von Ausführungsbeispielen mit weiteren Merkmalen unter Bezug auf die beigefügten Zeichnungen näher erläutert. In diesen zeigen:
- Fig. 1: einen Querschnitt durch die Spannvorrichtung gemäß eines ersten Ausführungsbeispiels, wobei der werkzeugseitige Anschlussbereich einteilig mit dem Extrusionswerkzeug ausgebildet ist;
- Fig. 2: einen Querschnitt durch die Spannvorrichtung gemäß eines zweiten Ausführungsbeispiels, wobei der werkzeugseitige Anschlussbereich hakenförmig ausgebildet ist;
- Fig. 3: einen Querschnitt durch die Spannvorrichtung gemäß eines dritten Ausführungsbeispiels, wobei der werkzeugseitige Anschlussbereich mit einem Gewinde versehen ist;
- Fig. 4: eine Draufsicht auf die Spannvorrichtung nach Fig. 1, bzw. Fig. 2 oder 3;
- Fig. 5: eine Draufsicht auf einen Spannring mit einem Innengewinde;
- Fig. 6: einen Querschnitt durch den Spannring nach Fig. 5;
- Fig. 7: eine Draufsicht auf einen einteilig mit dem Extrusionswerkzeug ausgebildeten Spannring; und
- Fig. 8: einen Querschnitt durch den Spannring nach Fig. 7.

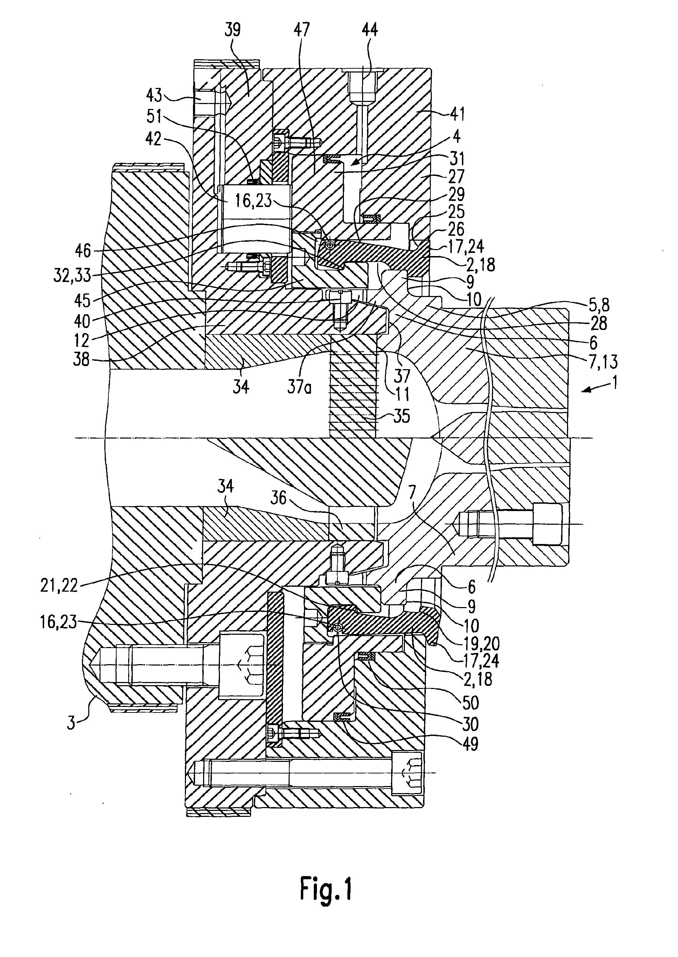

In Fig. 1 ist eine Spannvorrichtung nach einem ersten Ausführungsbeispiel der Erfindung mit ihren wichtigsten Bauteilen dargestellt, wie sie bei der Polymermaterialextrusion zum Einsatz kommt. Ferner ist in Fig. 1 das Ende eines Extruders 3 sowie eine gebrochen dargestellte Extrusionsdüse 1 gezeigt, die aus mehreren miteinander verschraubten Düsenplatten besteht. Die Spannvorrichtung ist zwischen dem Extruder 3 und der Extrusionsdüse 1, insbesondere der in Extrusionsrichtung ersten Düsenplatte der Extrusionsdüse 1 angeordnet.

Die Spannvorrichtung weist ein Spannelement 2 auf, das in dem in Fig. 1 gezeigten ersten Ausführungsbeispiel als Spannhaken 18 ausgebildet ist. Um eine symmetrische Krafteinleitung zu bewirken, sind mindestens zwei Spannhaken 18 erforderlich. Üblicherweise werden drei Spannhaken 18 verwendet, die auf einem kreisförmigen Umfang um 120° versetzt angeordnet sind. Eine größere Anzahl von Spannhaken ist ebenfalls möglich.

Ferner ist eine Betätigungseinrichtung 4 vorgesehen, die mit den Spannhaken 18 zusammenwirkt, um diese in axialer Richtung der Spannvorrichtung zu bewegen. Den Spannhaken 18 ist ein Spannmittel 5 zugeordnet, das vorliegend als Spannring 8 ausgeführt ist. Die Spannhaken 18 werden mit dem Spannring 8 in Eingriff gebracht und beaufschlagen diesen mit einer in Richtung des Extruders 3 wirkenden Spannkraft, so dass das mit dem Spannring 8 verbundene Extrusionswerkzeug 1 am Extruder 3 aufgespannt wird.

Die Spannstellung ist anhand des in Fig. 1 gezeigten oberen Spannhakens 18 dargestellt. Die Lösestellung, in der der Spannhaken 18 den Spannring 8 freigibt, ist anhand des in Fig. 1 gezeigten unteren Spannhakens 18 dargestellt.

### Nachfolgend wird der Aufbau des Spannrings 8 beschrieben:

Der Spannring 8 weist einen extruderseitigen Anschlussbereich 6 und einen werkzeugseitigen Anschlussbereich 7 auf. Der extruderseitige Anschlussbereich 6 umfasst dabei den Teil des Spannrings 8, der dem Extruder zugewandt ist. Der werkzeugseitige Anschlussbereich 7 umfasst den Teil des Spannrings 8, der dem Extrusionswerkzeug zugewandt ist.

Der extruderseitige Anschlussbereich 6 weist einen radial vorstehenden Absatz 9 auf, der mit einer zum Extrusionswerkzeug weisenden ersten Anlagefläche 10 ausgebildet ist. Der Absatz 9 kann als den Spannring umlaufender Bund ausgebildet sein.

Wie in Fig. 1 anhand des oberen Spannhakens 18 zu sehen, übergreift dieser den Absatz 9 und kommt mit der ersten Anlagefläche 10 in Anlage, über die die Einleitung der Spannkraft in den Spannring 8 erfolgt. Der Vorsprung 9 ist ausreichend stark dimensioniert, um die Spannkräfte übertragen zu können.

Ferner ist am extruderseitigen Ende des Spannrings 8 eine Auflagefläche 11 vorgesehen, die zumindest abschnittsweise zu der ersten Anlagefläche 10 des Spannrings 8 entgegengesetzt, insbesondere parallel angeordnet ist.

Der betreffende Abschnitt der Auflagefläche 11 liegt auf einem Einsatz, insbesondere einer Lochplatte 35 bzw. einem Ring 36 auf, und ist dadurch mit dem Extruder 3 kraftschlüssig verbunden. Über die erste Anlagefläche 10 und die zu dieser entgegengesetzt angeordneten Auflagefläche 11 wird die durch die Spannhaken 18 in den Spannring 8 eingeleitete Spannkraft auf den Extruder 3 übertragen. Dabei bildet die Auflagefläche 11 eine Dichtfläche, die die Spannvorrichtung gegen die Schmelze abdichtet.

Die Auflagefläche 11 wird radial nach innen durch eine Umlaufkante des Spannrings 8 und radial nach außen durch eine konzentrische Ringnut 37 begrenzt. Die radial außenliegende Wand der Ringnut 37 ist als axialer ringförmiger Fortsatz 37a ausgebildet, der sich in Richtung des Extruders 3 verjüngt. In diesem ringförmigen Fortsatz 37a sind zwei gegenüber angeordnete Radialnuten 12 vorgesehen, die zur Ausrichtung des Spannrings 8 dient. Eine größere oder kleinere Anzahl von Radialnuten 12 ist möglich.

Der extruderseitige Anschlussbereich 6 des Spannrings 8 übergreift ein komplementär zur Ringnut 37 ausgebildetes Innenteil 38 einer beheizbaren Grundplatte 39, die mit dem Extruder 3 verschraubt ist. Zwischen dem Innenteil 38 und der Ringnut 37 ist ein Spalt vorgesehen, der das Vorspannen des Spannrings 8 gestattet.

Eine Passfeder, die in die Radialnut 12 zur Ausrichtung des Spannrings 8 eingreift, ist mit dem Innenteil 38 der Grundplatte 39 durch eine Schraube 40 verschraubt.

Die Verbindung des Spannrings 8 mit dem Extruder 3 erfolgt also im Wesentlichen über die als Dichtfläche fungierende Auflagefläche 11 und die über die Anlagefläche 10 am Spannring 8 eingeleitete Spannkraft. Die einfache, schnelle und sichere Ausrichtung des Spannrings 8 wird durch die Radialnut 12 und die mit der Grundplatte 39 verschraubte Passfeder bewirkt.

Der werkzeugseitige Anschlussbereich 7 ist in dem vorliegenden ersten Ausführungsbeispiel nach Fig. 1 einteilig mit einem extruderseitigen Endabschnitt 13 des Extrusionswerkzeugs 1 ausgebildet, wobei der Endabschnitt 13 Teil einer in Extrusionsrichtung ersten Düsenplatte des Extrusionswerkzeugs, insbesondere der Extrusionsdüse, ist.

Die mit dem Spannring 8 zusammenwirkenden Spannhaken 18 sind jeweils wie folgt aufgebaut:

Jeder Spannhaken 18 umfasst einen länglichen Körper, der im Wesentlichen in axialer Richtung der Spannvorrichtung angeordnet ist. Auf der radial innen angeordneten Innenseite 28 des Spannhakens 18 ist im Bereich des werkzeugseitigen Endes des Spannhakens 18 eine Ausnehmung 19 vorgesehen, die komplementär zum Vorsprung 9 am Spannring 8 ausgebildet ist. Die Ausnehmung 19 weist eine zweite Anlagefläche 20 auf, die extruderseitig, also zum Extruder 3 hinweisend angeordnet ist.

An dieser Stelle wird angemerkt, dass die Definition der Orientierung einer Fläche als extruderseitig bzw. werkzeugseitig generell so zu verstehen ist, dass die Normale auf diese Fläche in Richtung des Extruders (extruderseitig) oder in Richtung des Werkzeugs (werkzeugseitig) verläuft.

Die zweite Anlagefläche 20 am Spannhaken 18 liegt in Spannstellung an der ersten Anlagefläche 10 am Spannring 8 an, wie anhand des oberen Spannhakens 18 in Fig. 1 gezeigt.

Das extruderseitige Ende des Spannhakens 18 weist einen Vorsprung 21 mit einer werkzeugseitigen dritten Anlagefläche 22 auf.

Wie in Fig. 1 gezeigt, hintergreift die Betätigungseinrichtung 4 diesen Vorsprung 21, so dass die dritte Anlagefläche 22 am Spannhaken 18 mit einer in Extruderrichtung wirkenden Spannkraft beaufschlagt und in Richtung des Extruders 3 gezogen werden kann.

Das Lösen und Spannen des Spannhakens 18 wird durch ein Freigabeelement 16 und ein Schließelement 17 unterstützt, die eine radiale Schwenkbewegung des Spannhakens 18 zum Spannring 8 hin bzw. vom Spannring 8 weg erzeugen. Wie anhand des in Fig. 1 unteren Spannhakens 18 dargestellt, ist der Spannhaken in Lösestellung vom Spannring 8 weggeschwenkt, so dass der Absatz 9 des Spannrings 8 von der Ausnehmung 19 des Spannhakens 18 freigegeben ist. Der Spannring 8 kann somit einfach vom Extruder 3 abgezogen werden.

Mit Hilfe des Schließelements 17 wird ausgehend von der Lösestellung (unterer Spannhaken 18) eine radiale Schließbewegung durch Verschwenken des Spannhakens 18 zum Spannring 8 hin erzeugt. Durch diese Schließbewegung wird die Ausnehmung 19 des Spannhakens 18 mit dem Vorsprung 9 des Spannrings 8 in Eingriff gebracht, wie anhand des in Fig. 1 gezeigten oberen Spannhakens in Spannstellung dargestellt.

Die Schwenkbewegung des Spannhakens zur Ausführung der radialen Freigabebewegung bzw. Schließbewegung erfolgt um eine entlang des Vorsprungs 21 des Spannhakens 18 verlaufende Schwenkachse. Der Vorsprung 21 dient somit sowohl als Angriffsfläche für die Einleitung der Spannkraft durch die Betätigungsvorrichtung 4 und andererseits als Drehpunkt für die Schwenkbewegung des Spannhakens 18.

Das Freigabeelement 16 umfasst einen Federring 23, der in einer Nut 30 an der Außenseite 29 des Spannhakens 18 aufgenommen ist. Dabei sind mehrere Spannhaken 18 auf dem Umfang des Federrings 23 angeordnet, der vorgespannt ist, so dass die Spannhaken 18 kraftschlüssig mit dem Federring 23 verbunden sind, der eine radial nach innen wirkende Stellkraft auf jedes extruderseitige Ende der Spannhaken 18 auswirkt. Aufgrund der vom Vorsprung 21 beabstandeten Anordnung des Federrings 23 wird ein Moment um die entlang des Vorsprungs 21 verlaufende Schwenkachse erzeugt, die die nach außen gerichtete radiale Freigabebewegung der Spannhaken 18 hervorruft.

Das Schließelement 17 umfasst eine radial angeordnete Nase 24, die an der Außenseite 29 jedes Spannhakens 18 ausgebildet ist. Die Nase 24 weist eine schräge, extruderseitige Fläche 25 auf. Das bedeutet, dass die Fläche 25 gegenüber einer senkrecht zur Extrusionsrichtung stehenden Fläche geneigt ist, wobei der Abstand der Fläche 25 zum Extruder 3 nach außen zunimmt. Mit anderen Worten ist die Nase 24 als sich nach außen verjüngender Vorsprung ausgebildet, der am werkzeugseitigen Ende des Spannhakens 18 in radialer Erstreckung vorgesehen ist.

Der Schrägfläche 25 ist eine ortsfeste Kante 26 eines Führungsteils 27 derart zugeordnet, dass die Fläche 25 über diese ortsfeste Kante 26 bewegbar ist. Das Führungsteil 27 ist als ein umlaufender Bund einer mit der Grundplatte 39 verschraubten Deckelplatte 41 ausgebildet, wobei die ortsfeste Kante 26 der werkzeugseitigen Innenkante der Deckelplatte 41 entspricht. Die radiale Schließbewegung wird ausgehend von der anhand des unteren Spannhakens 18 gezeigten Lösestellung dadurch erzeugt, dass der untere Spannhaken 18 durch die Betätigungsvorrichtung 4 in Richtung des Extruders 3 gezogen wird. Dabei läuft die Fläche 25 der Nase 24 über die ortsfeste Kante 26 und bewirkt aufgrund ihrer Neigung eine radiale Bewegung des Spannhakens 18 in Richtung des Spannrings 8.

In der anhand des oberen Spannhakens 18 gezeigten Spannstellung liegt die Nase 24 an der Innenseite des Führungsteils 27 an, wodurch der Spannhaken 18 in der Spannstellung arretiert ist. Durch die Beabstandung der Nase 24 vom Vorsprung 21 des Spannhakens wird ein Moment um die entlang des Vorsprungs 21 verlaufende Schwenkachse des Spannhakens 18 erzeugt, das ein Verschwenken des Spannhakens 18 und somit die Schließbewegung bewirkt.

Da die durch den Federring 23 aufgebrachte Stellkraft radial nach innen und die durch die Nase 24 erzeugte Stellkraft radial nach außen wirkt, wird der Federring 23 durch die Spannbewegung des Spannhakens 18 in Richtung des Extruders 3 verbunden mit der Schließbewegung vorgespannt.

Die Betätigungseinrichtung 4 ist wie folgt aufgebaut:

Die Betätigungsvorrichtung 4 umfasst einen in axialer Richtung der Spannvorrichtung bewegbaren Kolben 31, der in einem in der Deckelplatte 41 ausgebildeten Zylinder geführt ist.

Der Zylinder ist mit einer Zuleitung 44 zur Zuführung eines Druckmediums zur Beaufschlagung des Kolbens 31 mit einem Spanndruck ausgestattet. Der Kolben 31 ist ferner mit einem weiteren Lösekolben 42 in Anlage, der in der Grundplatte 39 in axialer Richtung beweglich gelagert ist. Der Lösekolben 42 ist über eine in der Grundplatte 39 vorgesehene Zuleitung 43 mit einem Lösedruck beaufschlagbar. Der Kolben 31 und der Lösekolben 42 ist durch Dichtringe 49, 50, 51 abgedichtet.

Der Kolben 31 ist zweiteilig mit einem radial innen angeordneten Innenteil 45 und einem Außenteil 47 ausgebildet, wie in Fig. 1 zu sehen. Im Kolben 31 ist ein Aufnahmeraum 46 zur Aufnahme des werkzeugseitigen Endes des Spannhakens 18 ausgebildet, der drei im Wesentlichen senkrecht zueinander angeordnete Wände aufweist, wobei der Aufnahmeraum 46 in Richtung des Extrusionswerkzeuges 1 geöffnet ist. Durch diese Öffnung ist der Spannhaken 18 geführt.

Das Innenteil 45 ist im Querschnitt L-förmig ausgebildet, wobei die beiden Schenkel des Innenteils 45 zwei Wände des Aufnahmeraums 46 bilden. Die dritte Wand des Aufnahmeraumes 46 wird durch das Außenteil 47 gebildet. Dabei ist der senkrecht zur Extrusionsrichtung angeordnete Schenkel des Innenteils 45 mit dem Außenteil 47 z. B. verschraubt. Der parallel zur Extrusionsrichtung und zum Außenteil 47 angeordnete Schenkel des Innenteils 45 ist an seinem werkzeugseitigen Ende mit einem Vorsprung 32 versehen. Der Vorsprung 32 weist eine extruderseitige vierte Anlagefläche 33 auf, die mit der an den Spannhaken 18 jeweils vorgesehenen dritten Anlagefläche 22 in Anlage bringbar ist. Der Vorsprung 32 am Kolben 31 hintergreift somit den am Spannhaken 18 vorgesehenen Vorsprung 21, so dass eine in Richtung des Extruders wirkende Spannkraft des Kolbens 31 auf den Spannhaken 18 übertragen werden kann.

Der Aufnahmeraum 46 ist etwas größer als das extruderseitige Ende des Spannhakens 18, wodurch eine begrenzte Schwenkbewegung des Spannhakens 18 ermöglicht wird.

Ein besonders gutes Strömungsverhalten der Schmelze beim Durchströmen der Spannvorrichtung wird durch einen Ringeinsatz 34 erzielt, der zwischen Extruder 3 und der Extrusionsdüse 1 angeordnet ist und in diesem Bereich zumindest teilweise den Schmelzekanal bildet. Wie in Fig. 1 gezeigt, ist der Innendurchmesser des Ringeinsatzes 34 variabel und nimmt in Extrusionsrichtung zu, d. h., der Innendurchmesser des Ringeinsatzes 34 wird zum Extrusionswerkzeug 1 hin größer. Dabei entspricht der Innendurchmesser auf der Extruderseite des Ringeinsatzes 34 dem Auslassdurchmesser des Extruders 3. Der Innendurchmesser auf der Werkzeugseite des Ringeinsatzes 34 entspricht dem Einlassdurchmesser des Extrusionswerkzeuges 1, wobei im vorliegend gezeigten Beispiel der Einlassdurchmesser des Extrusionswerkzeuges 1 größer als der Auslassdurchmesser des Extruders 3 ist. Eine andere Durchmesserkonstellation, bei der beispielsweise der Einlassdurchmesser des Extrusionswerkzeuges 1 kleiner ist als der Auslassdurchmesser des Extruders 3, ist ebenfalls denkbar. In diesem Fall nimmt der Innendurchmesser des Ringeinsatzes 34 in Extrusionsrichtung ab, d. h., der Innendurchmesser wird zum Extrusionswerkzeug 1 hin kleiner. Bei gleichem Auslassdurchmesser des Extruders 3 und Einlassdurchmesser des Extrusionswerkzeuges 1 ist der Innendurchmesser des Ringeinsatzes 34 konstant und entspricht dem Auslass- bzw. Einlassdurchmesser.

Wie ferner in Fig. 1 gezeigt, ist zwischen dem Ringeinsatz 34 und dem Spannring 8 die Hülse 36 oder ein anderer Einsatz, beispielsweise eine Lochplatte 35, angeordnet.

Der Ringeinsatz 34 verbessert das Strömungsverhalten der Schmelze.

Der vorstehend erläuterte Ringeinsatz 34 wird in bevorzugter Weise in einer Spannvorrichtung eingesetzt, die einen Spannring 8, wie in Fig. 1 gezeigt, aufweist.

Es ist möglich, den Ringeinsatz 34 in anderen Spannvorrichtungen zu verwenden, die keinen Spannring 8 aufweisen und bei denen das Aufspannen des Extrusionswerkzeuges auf andere Weise erfolgt.

Nachstehend wird die Funktionsweise der in Fig. 1 gezeigten Spannvorrichtung erläutert.

Zum Aufspannen des Extrusionswerkzeuges 1 am Extruder 3 wird der Kolben 31 mit einem Spanndruck beaufschlagt, so dass dieser in Richtung des Extruders 3 bewegt wird. Dabei nimmt der Kolben 31 die über den Umfang des Spannrings 8 verteilten Spannhaken 18 mit, so dass die Spannhaken 18 eine axiale Spannbewegung in Richtung des Extruders 3 ausführen. Durch diese axiale Bewegung wird die angeschrägte Nase 24 über die ortsfeste Kante 26 der Deckelplatte 41 gezogen, wodurch die Spannhaken 18 zum Spannring 8 hingeschwenkt werden.

In Spannstellung hintergreifen die Spannhaken 18 den am Spannring vorgesehenen radial vorstehenden Absatz 9 und sind durch die Anlage der Nase 24 an der Innenseite der Deckelplatte 41 arretiert. Durch den am Kolben 31 anliegenden Spanndruck werden die Spannhaken 18 und der mit diesen im Eingriff stehende Spannring 8 mit einer in Richtung des Extruders 3 wirkenden Spannkraft beaufschlagt, so dass das mit dem Spannring 8 verbundene Extrusionswerkzeug 1 sicher am Extruder 3 aufgespannt ist.

Zum Lösen der Spannvorrichtung wird der Lösekolben 42 mit einem Lösedruck beaufschlagt, der den Kolben 31 und die darin jeweils schwenkbar gelagerten Spannhaken 18 in Richtung des Extrusionswerkzeuges 1 bewegt. Durch die radial nach innen wirkende Stellkraft des Federrings 23 werden die Spannhaken 18 nach außen verschwenkt, so dass der radial sich erstreckende Absatz 9 des Spannrings 8 frei kommt.

Die Kolbenbewegung erfolgt dabei derart, dass das werkzeugseitige Ende des parallel zur Extrusionsrichtung angeordneten Schenkels des Innenteils 45 des Kolbens 31 gegen den Absatz 9 drängt und somit das Abziehen des Spannrings 8 erleichtert.

Nachfolgend werden das zweite und dritte Ausführungsbeispiel erläutert, wobei in den zugehörigen Figuren der Übersicht halber nur die von der Spannrichtung nach Fig. 1 abweichenden, beziehungsweise nicht beschriebenen Bauteile mit Bezugszeichen versehen sind.

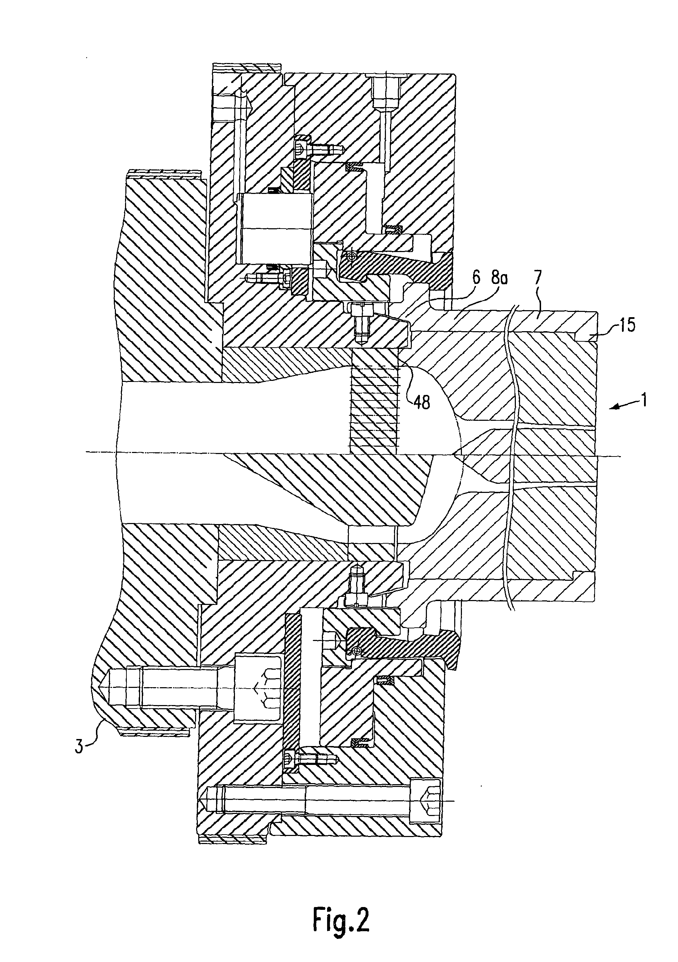

Das in Fig. 2 gezeigte zweite Ausführungsbeispiel der Spannvorrichtung ist für Extrusionsdüsen mit einheitlichen Außenmaßen konzipiert.

Das zweite Ausführungsbeispiel unterscheidet sich von dem ersten Ausführungsbeispiel insbesondere durch die Ausbildung des werkzeugseitigen Anschlussbereichs 7. Dieser werkzeugseitige Anschlussbereich 7 umfasst nach dem zweiten Ausführungsbeispiel einen hakenförmigen Endabschnitt 15, der das Extrusionswerkzeug 1 übergreift.

Überdies unterscheidet sich der extruderseitige Anschlussbereich 6 des Spannrings 8a von dem Anschlussbereich 6 des Spannrings 8 nach Fig. 1 dadurch, dass die Auflagefläche 11 nach Fig. 1 durch eine an der in Extrusionsrichtung ersten Düsenplatte vorgesehenen Auflagefläche 48 ersetzt ist.

Die Einleitung der Spannkraft erfolgt deshalb bei dem zweiten Ausführungsbeispiel über die hakenförmigen Endabschnitte 15 des Spannrings 8a in das Extrusionswerkzeug 1, das durch die Auflagefläche 48 am Extruder 3 abgestützt ist.

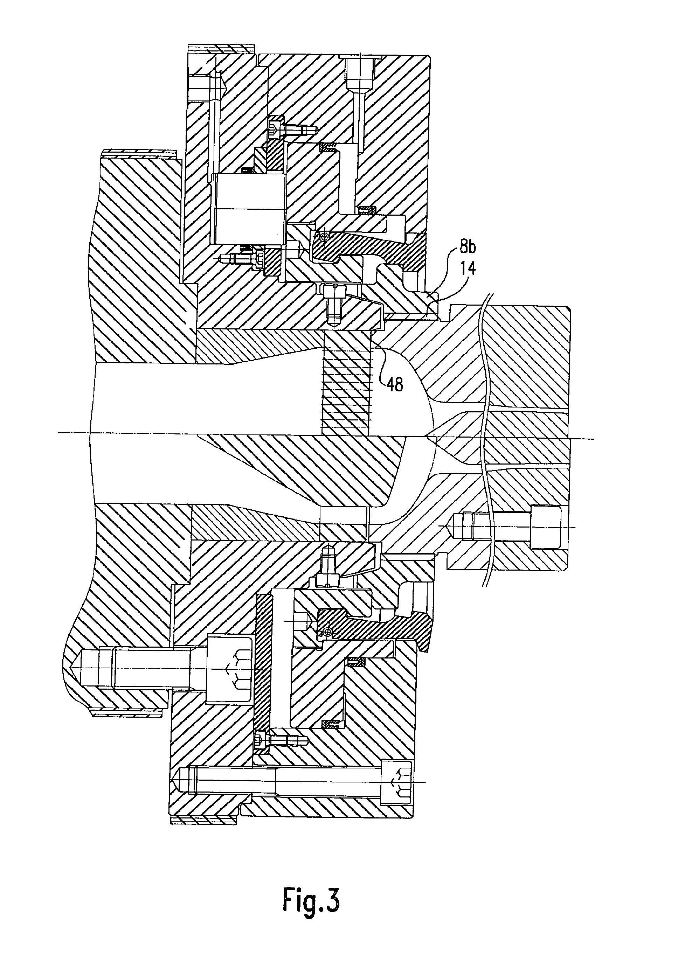

Das in Fig. 3 gezeigte dritte Ausführungsbeispiel der Spannvorrichtung weist einen Spannring 8b mit einem werkzeugseitigen Anschlussbereich 7 auf, der im Wesentlichen zylinderförmig ausgebildet ist und ein Gewinde 14 aufweist. Dieses Gewinde 14 ist vorliegend als Innengewinde ausgebildet, in das ein entsprechendes Außengewinde einer nicht gezeigten, in Extrusionsrichtung ersten Düsenplatte einschraubbar ist. Auch in diesem Ausführungsbeispiel ist die mit dem Spannring 8 einteilig ausgebildete Auflagefläche 11 durch eine an der in Extrusionsrichtung ersten Düsenplatte vorgesehenen Auflagefläche 48 ersetzt.

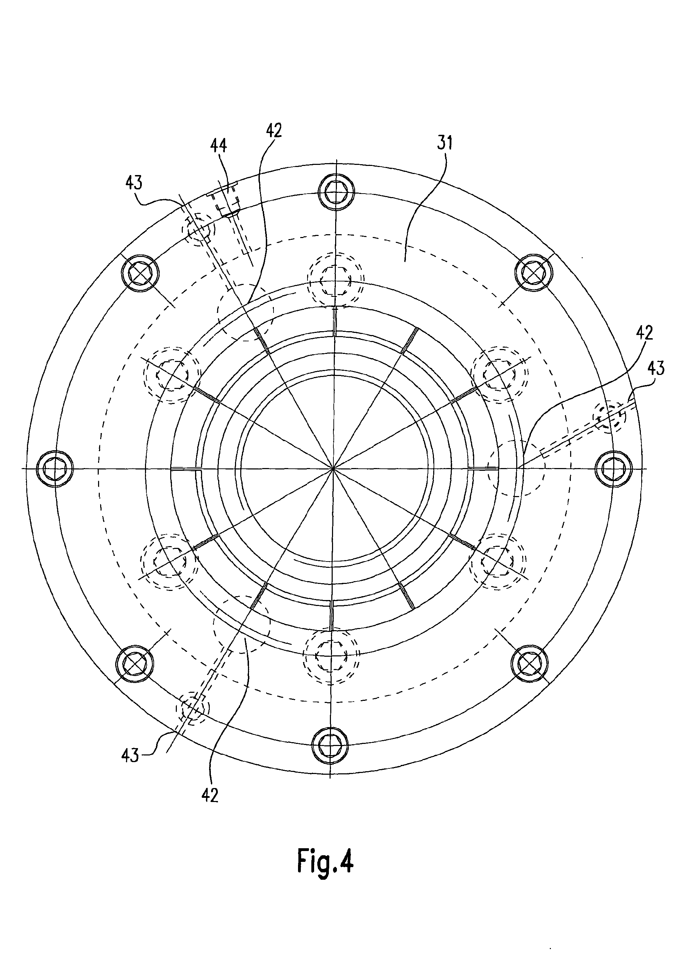

In der in Fig. 4 gezeigten Draufsicht der Spannvorrichtung ist zu erkennen, dass der Kolben 31 als Ringkolben ausgeführt ist, der den Spannring 8 konzentrisch umgibt. Dem Kolben 31 ist eine einzige Zuleitung 44 für die Beaufschlagung mit dem Spanndruck zugeordnet, wobei auch mehrere Zuleitungen möglich sind. Ferner ist in Fig. 4 zu sehen, dass über den Umfang verteilt, drei Lösekolben 42 vorgesehen sind, die auch die Position der zugehörigen Spannhaken 18 markieren. Die Lösezylinder 42 sind jeweils mit einer Zuleitung 43 für die Beaufschlagung mit einem Lösedruck versehen.

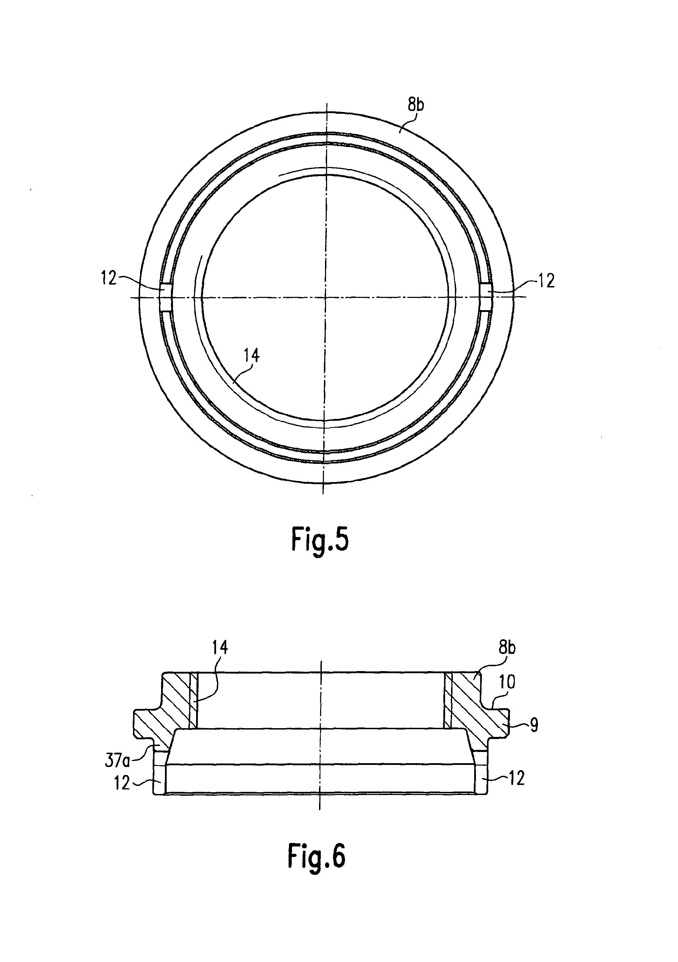

Fig. 5 zeigt eine Draufsicht auf einen Spannring 8b mit Gewinde 14 nach dem dritten Ausführungsbeispiel. In den Figuren 5 und 6 sind die beiden Radialnuten 12 besonders gut zu erkennen.

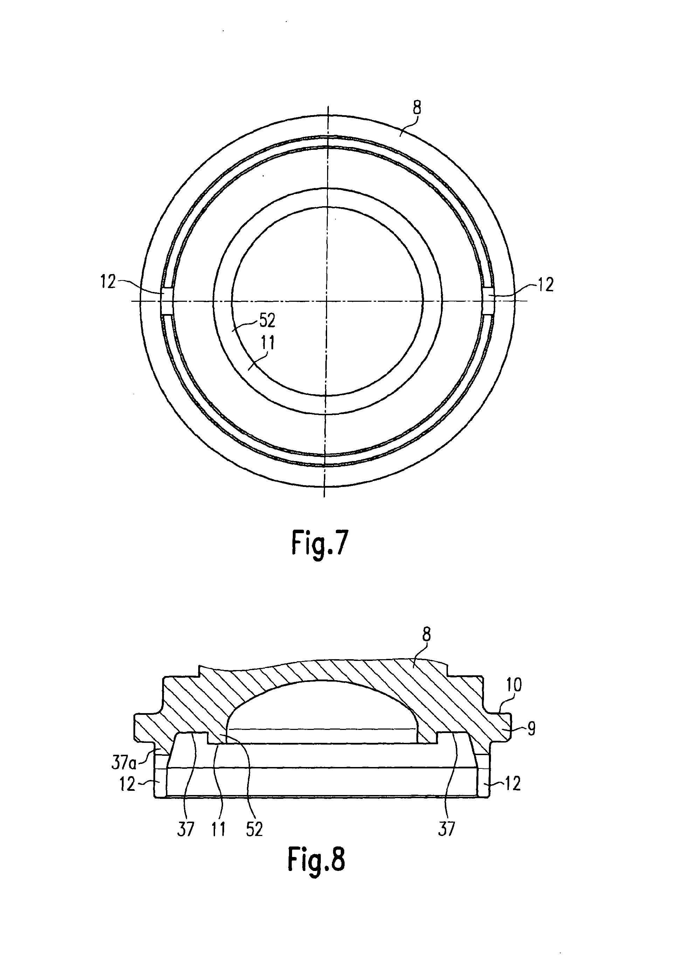

Die Figuren 7 und 8 zeigen den Spannring 8 nach dem ersten Ausführungsbeispiel, wobei auch hier die Ausbildung der Radialnuten 12 gezeigt ist. In den Figuren 7 und 8 ist ferner die Auflagefläche 11 zu sehen, die einen ringförmigen Bund 52 in axialer Richtung begrenzt. In den Figuren 7 und 8 sind keine Details zur Form der Schmelzekanäle gezeigt.

## Patentansprüche

1. Spannvorrichtung für ein Extrusionswerkzeug (1) mit einem Spannelement (2) zum lösbaren Verbinden des Extrusionswerkzeuges (1) mit einem Extruder (3) und einer Betätigungseinrichtung (4) zum Lösen und Spannen des Spannelements (2),
**gekennzeichnet durch**
ein Spannmittel (5) mit einem extruderseitigen Anschlussbereich (6), der **durch** das Spannelement (2) mit dem Extruder (3) lösbar verbunden ist, und einem werkzeugseitigen Anschlussbereich (7) der mit dem Extrusionswerkzeug (1) lösbar oder fest verbunden ist.

2. Spannvorrichtung nach Anspruch 1, **dadurch gekennzeichnet, dass** das Spannmittel (5) einen Spannring (8, 8a, 8b) mit einem radial vorstehenden Absatz (9) umfasst, der im extruderseitigen Anschlussbereich (6) angeordnet und mit einer zum Extrusionswerkzeug (1) weisenden ersten Anlagefläche (10) ausgebildet ist.

3. Spannvorrichtung nach Anspruch 1 oder 2, **dadurch gekennzeichnet, dass** der extruderseitige Anschlussbereich (6) des Spannrings (8, 8a, 8b) einen axialen Fortsatz (37a) aufweist, in dem wenigstens eine in Richtung des Extruders (3) geöffnete Radialnut (12) zur Ausrichtung des Spannrings (8) vorgesehen ist.

4. Spannvorrichtung nach wenigstens einem der Ansprüche 1 bis 3, **dadurch gekennzeichnet, dass** der extruderseitige Anschlussbereich (6) des Spannrings (8) eine in Umfangsrichtung vorgesehene Auflagefläche (11) aufweist, die bezüglich der ersten Anlagefläche (10) zumindest abschnittsweise in entgegengesetzter Richtung angeordnet ist.

5. Spannvorrichtung nach wenigstens einem der Ansprüche 1 bis 4, **dadurch gekennzeichnet, dass** der werkzeugseitige Anschlussbereich (7) einteilig mit einem extruderseitigen Endabschnitt (13) des Extrusionswerkzeugs (1) ausgebildet ist.

6. Spannvorrichtung nach wenigstens einem der Ansprüche 1 bis 3, **dadurch gekennzeichnet, dass** der werkzeugseitige Anschlussbereich (7) im Wesentlichen zylinderförmig ausgebildet ist und ein Gewinde (14) aufweist.

7. Spannvorrichtung nach wenigstens einem der Ansprüche 1 bis 3, **dadurch gekennzeichnet, dass** der werkzeugseitige Anschlussbereich (7) einen hakenförmigen Endabschnitt (15) aufweist, der das Extrusionswerkzeug (1) übergreift.

8. Spannvorrichtung nach wenigstens einem der Ansprüche 1 bis 7, **dadurch gekennzeichnet, dass** dem Spannelement (2) ein Freigabeelement (16) zugeordnet ist, das eine Stellkraft zur Erzeugung einer im wesentlichen radialen Freigabebewegung des Spannelements (2) aufbringt.

9. Spannvorrichtung nach wenigstens einem der Ansprüche 1 bis 8, **dadurch gekennzeichnet, dass** dem Spannelement (2) ein Schließelement (17) zugeordnet ist, das eine Stellkraft zur Erzeugung einer im wesentlichen radialen Schließbewegung des Spannelements (2) aufbringt.

10. Spannvorrichtung nach Anspruch 9, **dadurch gekennzeichnet, dass** die Stellkraft zur Erzeugung der Schließbewegung der Stellkraft zur Erzeugung der Freigabebewegung entgegenwirkt.

11. Spannvorrichtung nach wenigstens einem der Ansprüche 1 bis 10, **dadurch gekennzeichnet, dass** das Spannelement (2) wenigstens zwei Spannhaken (18) umfasst.

12. Spannvorrichtung nach Anspruch 11, **dadurch gekennzeichnet, dass** die Spannhaken (18) jeweils eine Ausnehmung (19) mit einer extruderseitigen zweiten Anlagefläche (20) aufweisen, die mit der am Spannring (8, 8a, 8b) vorgesehenen ersten Anlagefläche (10) in Anlage bringbar ist.

13. Spannvorrichtung nach Anspruch 11 oder 12, **dadurch gekennzeichnet, dass** die Spannhaken (18) jeweils einen Vorsprung (21) mit einer werkzeugseitigen dritten Anlagefläche (22) aufweisen, die mit der Betätigungseinrichtung (4) zusammenwirkt.

14. Spannvorrichtung nach wenigstens einem der Ansprüche 11 bis 13, **dadurch gekennzeichnet, dass** das Freigabeelement (16) einen Federring (23) umfasst, auf dessen Umfang die Spannhaken (18) kraftschlüssig angeordnet sind.

15. Spannvorrichtung nach wenigstens einem der Ansprüche 11 bis 14, **dadurch gekennzeichnet, dass** das Schließelement (17) eine radial angeordnete Nase (24) umfasst, die an jedem Spannhaken (18) ausgebildet ist, wobei die Nase (24) eine schräge, extruderseitige Fläche (25) aufweist, die über eine ortsfeste Kante (26) eines Führungsteils (27) bewegbar ist.

16. Spannvorrichtung nach den Ansprüchen 11 bis 15, **dadurch gekennzeichnet, dass** die Spannhaken (18) jeweils eine zum Spannring (8) weisende Innenseite (28) und eine gegenübergeordnete Außenseite (29) aufweisen, wobei die Ausnehmung (19) und der Vorsprung (21) an der Innenseite (28), sowie die Nase (24) und eine den Federring (23) aufnehmende Nut (30) an der Außenseite (29) ausgebildet sind, und der Vorsprung (21) zwischen der Nut (30) und der Nase (24) angeordnet und als Drehpunkt ausgebildet ist.

17. Spannvorrichtung nach wenigstens einem der Ansprüche 13 bis 16, **dadurch gekennzeichnet, dass** die Betätigungseinrichtung (4) einen zum Spannen und Lösen der Spannhaken (18) in axialer Richtung der Spannvorrichtung bewegbaren Kolben (31) umfasst, der Mittel zur Lagerung der Spannhaken aufweist, wobei ein Vorsprung (32) mit einer extruderseitigen vierten Anlagefläche (33) vorgesehen ist,
die mit der an den Spannhaken (18) jeweils vorgesehenen dritten Anlagefläche (22) in Anlage bringbar ist.

18. Spannvorrichtung nach wenigstens einem der Ansprüche 2 bis 17, **dadurch gekennzeichnet, dass** ein Ringeinsatz (34) vorgesehen ist, der dem Spannring (8) koaxial in Extrusionsrichtung vorgeordnet und dessen Innendurchmesser konstant oder in axialer Richtung variabel ist.

19. Spannvorrichtung für ein Extrusionswerkzeug (1) zum lösbaren Verbinden des Extrusionswerkzeuges (1) mit einem Extruder (3), **gekennzeichnet durch** einen Ringeinsatz (34), der zwischen einem Auslass des Extruders (3) und einem Einlass des Extrusionswerkzeuges (1) vorgesehen ist, wobei der Innendurchmesser des Ringeinsatzes (34) auf der Extruderseite des Ringeinsatzes (34) dem Auslassdurchmesser des Extruders (3) und auf der Werkzeugseite des Ringeinsatzes (34) dem Einlassdurchmesser des Extrusionswerkzeuges (1) entspricht.

20. Spannvorrichtung nach Anspruch 19, **dadurch gekennzeichnet, dass** der Innendurchmesser des Ringeinsatzes (34) konstant oder in Extrusionsrichtung abnehmend oder in Extrusionsrichtung zunehmend ausgebildet ist.

21. Extruder mit einer Spannvorrichtung nach wenigstens einem der Ansprüche 1 bis 20.
